# EUROPEAN PATENT APPLICATION

(11) **EP 2 684 726 A2**
(43) Date of publication of application: **15.01.2014**
(21) Application number: 13175612.4
(22) Date of filing: 08.07.2013
(51) Int. Cl.: B60K 17/04, B60K 7/00

(54) **Suspension and drive device for electrically driving a spring-mounted wheel of a road vehicle**

(30) Priority: 09.07.2012 NL 2009161
(71) Applicant: Teamwork Technology B.V., 1736 KB Zijdewind (NL)
(72) Inventor: Wolters, Laurens, 7131 GL Lichtenvoorde (NL)
(74) Representative: Eveleens Maarse, Pieter

(57) **Abstract**

The invention relates to a suspension and drive device for driving a spring-mounted wheel of a road vehicle, comprising bearings connected in spring-mounted manner to the road vehicle, a wheel shaft mounted in the bearings and provided with a coupling flange for the wheel, a planetary gear system coupled to the wheel shaft and an electric motor with a pinion which is placed on its output shaft and which is in engagement with the planetary gear system. A planetary gear system enables a small and light construction, while the losses of a planetary gear system are small. The planetary gear system preferably comprises a sun wheel fixedly connected to one of the bearings, a planet wheel support fixedly connected to the wheel shaft, at least one planet wheel which is placed on the planet wheel support and which is in engagement with the sun wheel, and a bearing-mounted satellite wheel which is in engagement on its inner side with the at least one planet wheel and which is in engagement with the pinion placed on the shaft of the electric motor.

## Description

The present invention relates to the driving of a wheel of a road vehicle. The increasing scarcity of fossil fuels has resulted in the increasing popularity of electrically driven road vehicles. These vehicles can be formed by fully electrically driven vehicles or by hybrid vehicles. Direct and individual driving each of the wheels is attractive because the mass of the vehicle is thereby reduced and transmission losses can be limited. Such vehicles are usually configured to convert the kinetic energy of the vehicle released during braking to electrical energy and to store this electrical energy. The transmission losses thus occur both during driving and during braking.

It is therefore attractive to place the electric motor as close as possible to the wheel so as to make the transmission as short as possible. The wheels are however connected in spring-mounted manner to the bodywork of the vehicle so that the wish to place the motor close to the wheel for driving results in an increase of the mass spring-mounted only by the tyres but not by the main spring system of the vehicle, which adversely affects the dynamic behaviour of the vehicle and greatly increases the dynamic forces on the motor. It is noted that this is particularly the result of the relatively large mass of an electric motor. The mass of an electric motor is after all closely related to the torque to be generated by the electric motor. It is therefore attractive to make use of an electric motor with a lower torque and a higher rotation speed, whereby the mass of the electric motor can be greatly reduced. A small electric motor moreover has a lower cost price. This however results in the need for a transmission mechanism, which in turn increases the mass of the drive spring-mounted only by the tyres.

The object of the present invention is to provide a suspension and drive device which makes it possible to apply a fast, small and thereby light and relatively inexpensive electric motor, and the mass of which is as small as possible.

This object is achieved by a suspension and drive device for driving a spring-mounted wheel of a road vehicle, comprising bearings connected in spring-mounted manner to the road vehicle, a wheel shaft mounted in the bearings and provided with a coupling flange for the wheel, a planetary gear system coupled to the wheel shaft and an electric motor with a pinion placed on its output shaft and being in engagement with the planetary gear system.

The application of a planetary gear system enables a construction which is light and not very voluminous, while the losses of a planetary gear system are small. Another advantage of a planetary gear system is the possible application of more than one planet wheel so that the transmission of the forces is distributed over different planet wheels. The result hereof is that the teeth of the planet wheels, the sun wheel and the satellite wheel are less heavily loaded.

A planetary gear system has three shafts, i.e. the shaft of the sun wheel, of the planet wheel support and of the satellite wheel. All these shafts can in principle be chosen as driven shaft, shaft for driving and stationary shaft. According to a first preferred embodiment, the planetary gear system comprises a sun wheel fixedly connected to one of the bearings, a planet wheel support fixedly connected to the wheel shaft, planet wheels which are placed on the planet wheel support and which are in engagement with the sun wheel, and a bearing-mounted satellite wheel which is in engagement on its inner side with the planet wheels and in engagement on its outer side with the pinion placed on the output shaft of the electric motor. This configuration makes it possible for the electric motor to drive the satellite wheel on its outer side which, when a small pinion is chosen, enables an even smaller dimensioning of the electric motor. A small torque is initially transmitted here between the pinion and the satellite wheel, while a greater torque, which is distributed over more than one gear, is transmitted respectively between the satellite wheel and the planet wheels and between the planet wheels and the sun wheel.

In order to reduce still further the volume required for the drive it is recommended that the axis of the planet wheels extends transversely of the axis of the wheel shaft and that the satellite wheel and the sun wheel are both crown wheels. It is noted here that this right-angled configuration makes it possible for the force transmission to take place at the greatest possible distance from the axis, whereby the forces on the teeth of the gears are relatively small. The use of crown wheels and straight toothed gears, which are relatively inexpensive to manufacture, reduces the cost price.

For an optimal distribution of the forces it is recommended that the radius of the engaging part of the two crown wheels is the same. These wheels are hereby equally loaded.

According to an alternative embodiment, the axis of the planet wheels extends transversely of the axis of the wheel shaft, and the satellite wheel, the sun wheel and the planet wheels are all conical gears.

The above elucidated embodiments all extend to some extent in axial direction. In situations in which space is limited in that direction, for instance due to the presence of voluminous braking systems, it can be attractive to apply an embodiment wherein the axis of the planet wheels, of the satellite wheel and of the sun wheel extends parallel to the axis of the wheel shaft and wherein the planet wheels, the satellite wheel and the sun wheel are all straight toothed gears.

Within the planetary gear system the transmission of the forces, i.e. the torque, takes place via the planet wheels. In order to distribute the forces per planet wheel a preferred embodiment proposes that the planetary gear system be provided with at least two planet wheels. This moreover provides symmetry so that no asymmetrical torques remain. It will be apparent that other numbers of planet wheels can also be applied, such as four, six or eight planet wheels.

As already elucidated in the preamble, it is attractive to give the electric motor the smallest possible construction with the greatest possible rotation speed. This requires a greater transmission ratio. According to a preferred embodiment, the transmission ratio of the planetary gear system is equal to or greater than two.

Although it is readily possible to construct small, fast electric motors with electromagnets, the increasing availability of permanent magnets with high field strengths makes it attractive to apply these magnets. A motor with permanent magnets further requires no exciting current, so increasing the efficiency of a motor with permanent magnets. A preferred embodiment therefore provides such a suspension and drive device wherein the electric motor is a fast electric motor provided with permanent magnets.

Because diverse parts of an electric motor can develop a great deal of heat during operation, particularly during braking when they are then heavily loaded, it is recommended that the electric motor is a liquid-cooled electric motor.

According to a further preferred embodiment, the permanent magnets are placed in the inner rotor and the rotor is provided with a binding comprising strong fibres and extending in tangential direction round the outer surface of the rotor. A light method of enclosing the magnets is hereby obtained which can even withstand high rotation speeds.

In order to make the torque to be generated by the electric motor as uniform as possible, this being important in avoiding vibrations and varying load on the gears, it is recommended that the magnets extend with a component in the tangential direction of the rotor.

Although the measures according to the invention are also applicable to non-steerable wheels of a road vehicle, the dimensions of the drive are small such that it can also be applied in steerable wheels such as the front wheels of a road vehicle.

The invention also relates to a road vehicle provided with at least four wheels, at least two of which are provided with a suspension and drive device as according to any of the foregoing claims.

The present invention will now be elucidated with reference to the accompanying drawings, in which:
- Figure 1:: is a schematic cross-sectional view of a first embodiment; and
- Figure 2:: is a schematic cross-sectional view of a second embodiment.

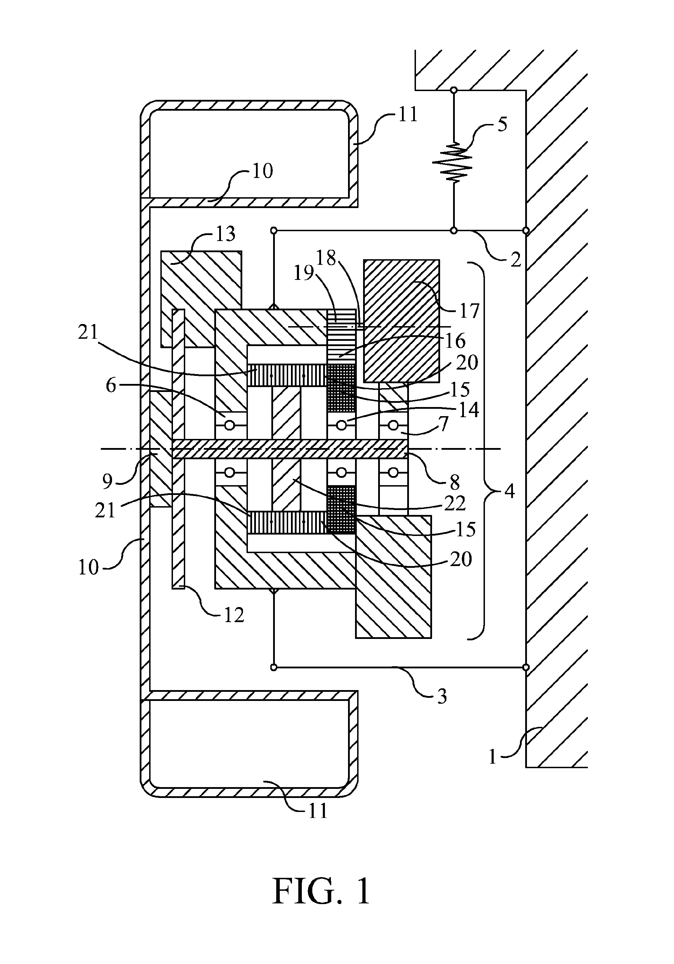

A load-bearing part of the bodywork of a road vehicle such as a passenger car or a van is shown schematically and designated with 1 in figure 1. A housing designated 4 in its entirety is mounted for movement in substantially vertical direction by means of two likewise schematically shown support arms 2, 3. In order to support the mass of the bodywork a likewise schematically shown spring 5 is connected pivotally to the upper support arm 2 and the load-bearing part of bodywork 1.

Housing 4 is provided with two concentrically placed bearings 6, 7 in which a wheel shaft 8 is mounted. Arranged on the outer side of the wheel shaft is a coupling flange 9 against which a rim 10 is fastened by means of bolts (not shown). A tyre 11 is arranged on the rim in the usual manner. A brake disc 12 is also mounted on wheel shaft 8 and a brake 13 engaging on the brake disc is connected to housing 4. It will be apparent that multiple brakes 13 can be applied.

Placed concentrically with bearings 6, 7 on wheel shaft 8 is a bearing 14 on which a disc 15 is mounted rotatably relative to the wheel shaft. This disc 15 is provided on its periphery with a gear ring 16. Mounted on housing 4 is an electric motor 17, on the output shaft 18 of which is placed a pinion 19 which is in engagement with gear ring 16. Arranged on the outward facing end surface of disc 15 is a gear ring 20 placed concentrically relative to wheel shaft 8, this in a form such that a bevel gear is formed. Also arranged concentrically relative to wheel shaft 8 on the inner side of housing 4 is a gear ring 21 which, together with housing 4, forms a bevel gear. The diameter and the width of the two toothings 20 and 21 are substantially the same. Four arms 22, each extending at a perpendicular angle relative to wheel shaft 8 and each other, are arranged on wheel shaft 8. Only two of these four arms 22 are shown in figure 1. Placed at the end of each of the four arms is a bearing 23, the axis of which extends in radial direction of the wheel shaft. Placed on each of these bearings 23 is a straight toothed gear 24, each of which is in engagement with both gear rings 20, 21. The configuration of a planetary gear system is thus obtained. Disc 15, together with gear ring 20, here forms the satellite wheel, straight toothed gears 24 form the planet wheels, arms 22 form the planet wheel supports and gear ring 21, together with the housing, forms the sun wheel, which in the configuration used is stationary. This configuration initially reduces the rotation speed of electric motor 17 by a factor equal to the ratio of the number of teeth of pinion 19 and the number of teeth of gear ring 16, while the rotation speed is then halved by the planetary gear system. A corresponding increase in the torque is hereby obtained up to a value sufficiently large to drive a wheel of a road vehicle.

It is noted here that, assuming that the road vehicle has four wheels, it is possible to provide all four wheels of the road vehicle with a drive of the above described type, but that it is also possible that only two of the four wheels of the road vehicle are provided with such a drive. The dimensions of the drive are also small such that it can be easily applied on a steerable wheel. Although this is not shown in figure 1, it will be apparent that this steerability can be achieved by embodying the connection between housing 4 and support arms 2, 3 as a ball joint, wherein a rod assembly has to be provided to actually steer the wheel.

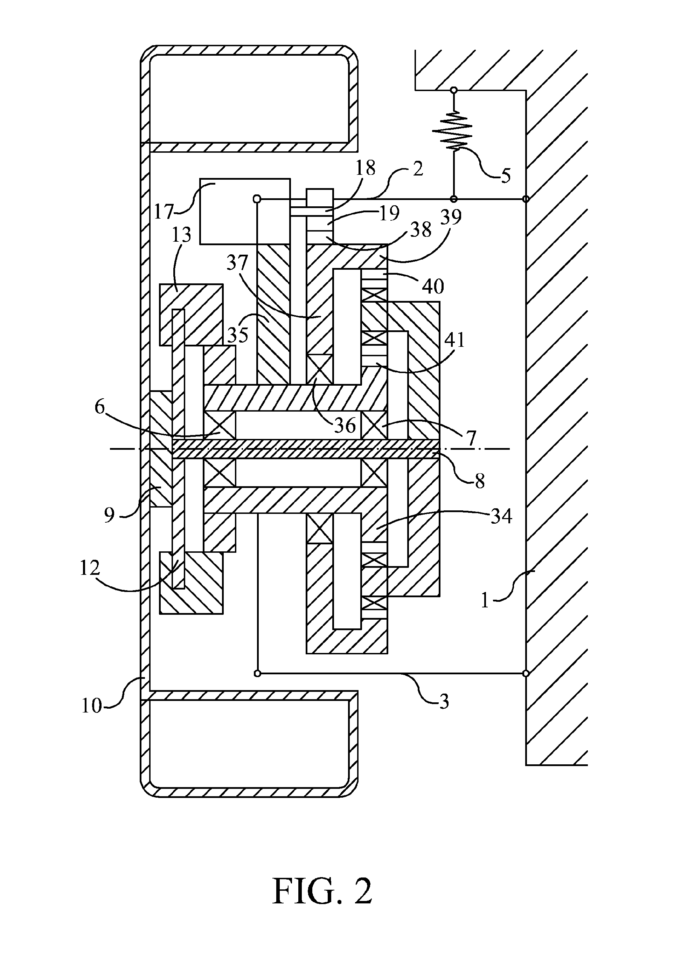

Figure 2 shows an embodiment broadly similar to the embodiment shown in figure 1 but wherein the planetary gear system is embodied solely with straight toothed gears. Use is made as far as possible here of the same reference numerals as in the foregoing figure.

In the embodiment of figure 2 housing 4 is replaced by a much smaller sleeve 34. Support arms 2 and 3 are therefore connected to sleeve 34 and bearings 6 and 7 are placed in sleeve 34 for the purpose of mounting wheel shaft 8. Mounted on sleeve 34 by means of an arm 35 is the electric motor 17 which, as in the foregoing embodiment, is provided with an output shaft 18 and a pinion 19 placed thereon.

Placed round sleeve 34 is a bearing 36 on which a disc 37 is rotatably mounted. The disc is provided on its outer surface with a gear ring 38 which is in engagement with pinion 19 of electric motor 17. Disc 37 is coupled to a concentric bush 39 which is provided on its inner side with a gear ring 40. A gear ring 41 is also arranged concentrically with gear ring 40 on sleeve 34. Arranged on wheel shaft 8 are four arms 22, each extending at a perpendicular angle relative to wheel shaft 8 and to each other. Only two of these four arms 22 are shown in figure 1. Placed at the end of each of the four arms is a bearing 23, the axis of which extends parallel to that of the wheel shaft. Placed on each of these bearings 23 is a straight toothed gear 24, each of which is in engagement with both gear rings 38, 40. The configuration of a planetary gear system is hereby obtained. Gear ring 34 here forms the sun wheel, straight toothed gears 24 form the planet wheels, arms 24 form the planet wheel supports and gear ring 40 forms the satellite wheel. In the configuration used sun wheel 34 is stationary.

As shown in the figure, the diameter of the embodiment of figure 2 is greater than that of figure 1, while the axial length is slightly smaller. The placing of the support arms is also somewhat more difficult in the embodiment of figure 2. It should however be taken into account that the electric motor can be placed at diverse positions, making it possible to choose a position where it impedes the support arms as little as possible.

It will also be apparent that numerous structural variations of the shown configurations can be applied and that the scope of protection is defined solely by the claims.

## Claims

1. Suspension and drive device for driving a spring-mounted wheel of a road vehicle, comprising:
- bearings connected in spring-mounted manner to the road vehicle;
- a wheel shaft mounted in the bearings and provided with a coupling flange for the wheel;
- a planetary gear system coupled to the wheel shaft; and
- an electric motor with a pinion placed on its output shaft and which is in engagement with the planetary gear system.

2. Suspension and drive device as claimed in claim 1, **characterized in that** the planetary gear system comprises:
- - a sun wheel fixedly connected to one of the bearings;
- - a planet wheel support fixedly connected to the wheel shaft;
- - at least one planet wheel which is placed on the planet wheel support and which is in engagement with the sun wheel; and
- - a bearing-mounted satellite wheel which is in engagement on its inner side with the at least one planet wheel and which is in engagement with the pinion placed on the output shaft of the electric motor.

3. Suspension and drive device as claimed in claim 2, **characterized in that** the axis of the planet wheels extends transversely of the axis of the wheel shaft and that the satellite wheel and the sun wheel are both crown wheels.

4. Suspension and drive device as claimed in claim 3, **characterized in that** the radius of the engaging part of the two crown wheels is the same.

5. Suspension and drive device as claimed in claim 2, **characterized in that** the axis of the planet wheels extends transversely of the axis of the wheel shaft, and that the satellite wheel, the sun wheel and the planet wheels are all conical gears.

6. Suspension and drive device as claimed in claim 1 or 2, **characterized in that** the axis of the planet wheels, of the satellite wheel and of the sun wheel extends parallel to the axis of the wheel shaft and that the planet wheels, the satellite wheel and the sun wheel are all straight toothed gears.

7. Suspension and drive device as claimed in any of the foregoing claims, **characterized in that** the planetary gear system is provided with at least two planet wheels.

8. Suspension and drive device as claimed in any of the foregoing claims, **characterized in that** the transmission ratio of the planetary gear system is equal to or greater than two.

9. Suspension and drive device as claimed in any of the foregoing claims, **characterized in that** the electric motor is a fast electric motor provided with permanent magnets.

10. Suspension and drive device as claimed in claim 9, **characterized in that** the electric motor is a liquid-cooled electric motor.

11. Suspension and drive device as claimed in claim 9 or 10, **characterized in that** the permanent magnets are placed in the inner rotor and that the rotor is provided with a binding provided with strong fibres and extending in tangential direction round its outer surface.

12. Suspension and drive device as claimed in claim 9, 10 or 11, **characterized in that** the magnets extend with a component in the tangential direction of the rotor.

13. Suspension and drive device as claimed in any of the foregoing claims, **characterized in that** the driven wheel is a steerable wheel.

14. Road vehicle provided with at least four wheels, at least two of which are provided with a suspension and drive device as claimed in any of the foregoing claims.
